# EUROPÄISCHE PATENTSCHRIFT

(11) **EP 3 568 317 B1**
(45) Veröffentlichungstag und Bekanntmachung des Hinweises auf die Patenterteilung: **13.05.2020**
(21) Anmeldenummer: 18722458.9
(22) Anmeldetag: 02.05.2018
(51) Int. Cl.: B60N 2/66, A47C 7/46

(54) **LORDOSENSTÜTZE FÜR EINEN SITZ**
LUMBAR SUPPORT FOR A SEAT
APPUI LOMBAIRE POUR UN SIÈGE

(30) Priorität: 02.05.2017 DE 102017109367
(43) Veröffentlichungstag der Anmeldung: 20.11.2019
(73) Patentinhaber: Component Engineering Services GmbH, 38518 Gifhorn (DE)
(72) Erfinder: WINKELHAKE, Bernd, 38518 Gifhorn (DE); ARNKE, Daniel, 38159 Vechelde (DE)
(74) Vertreter: Flügel Preissner Schober Seidel
(86) Internationale Anmeldenummer: PCT/EP2018/061141
(87) Internationale Veröffentlichungsnummer: WO 2018/202679

(56) Entgegenhaltungen:
- WO-A1-2006/133809
- US-A1- 2003 071 501
- US-A1- 2005 275 263

## Beschreibung

Die Erfindung betrifft eine Lordosenstütze für einen Sitz, insbesondere für einen Sitz eines Kraftfahrzeugs. Des Weiteren betrifft die Erfindung einen Sitz, der die Lordosenstütze umfasst.

Eine Lordose bezeichnet allgemein eine Krümmung der Wirbelsäule nach vorne, also bauchwärts. Die Wirbelsäule gesunder Menschen weist eine Lordose im Bereich der Halswirbelsäule und eine im Bereich der Lendenwirbelsäule auf. Im Sitzen wirkt insbesondere auf die Lendenwirbelsäule eine hohe Last. Lordosenstützen dienen zum Unterstützen der Lordose im Bereich der Lendenwirbelsäule. Eine angemessene Unterstützung der Lordose im Bereich der Lendenwirbelsäule führt dazu, dass die Muskulatur entlastet wird. Dadurch ist ein entspanntes und schonendes Sitzen auch über längere Zeiträume möglich.

Lordosenstützen werden üblicherweise in der Rückenlehne von Sitzen hinter dem Polster verbaut. Die Rückenkontur jeder Person ist individuell und unterscheidet sich je nach Trainingszustand, physiologischer und psychologischer Verfassung. Zudem wird eine Unterstützung der Lendenwirbelsäule durch jede Person unterschiedlich empfunden. Es ist daher von Vorteil, wenn die Lordosenstütze im Hinblick auf diese individuellen Aspekte einstellbar ist. Dabei wird unterschieden zwischen Zweiwege-Lordosenstützen, bei denen lediglich die Wölbung einstellbar ist, und Vierwege-Lordosenstützen, bei denen Wölbung und die Höhe eines Wölbscheitels einstellbar sind.

Zum Einstellen der Lordosenstütze sind unterschiedliche Konzepte bekannt. Häufig werden Lordosenstützen elektromechanisch oder pneumatisch verstellt. Bei etwa einer elektromechanischen Vierwege-Lordosenstütze sind ein Aktuator zum Einstellen der Wölbung und ein weiterer Aktuator zum Einstellen der Höhe des Wölbscheitels erforderlich. Dabei muss der Aktuator für die Höhenverstellung vergleichsweise große Wege bis zu 100 mm verrichten. Alternativ kann lediglich ein Aktuator mit einem Getriebe verbaut werden, wie es in DE 10 2014 201 049 A1 offenbart ist. Bei einer pneumatischen Vierwege-Lordosenstütze befüllt ein Kompressor mehrere Luftzellen. Mehrere Ventile öffnen und schließen die Luftzellen.

AT 358 767 B offenbart eine biegsame, elastische Stütze, deren Enden mittels Scharnieren neigbar sind, um eine Krümmung der Stütze zu verlagern. Die Scharniere sind mittels einer Schraubenspindel verstellbar.

Eine Rückenlehne für einen Rollstuhl offenbart US 2008/0079298 A1. Die Rückenlehne ist mit einem Gestell verbunden, durch das die Form der Rückenlehne verstellt werden kann.

Eine Lordosenstütze für einen Sitz ist aus US 2003/0071501 A1 bekannt. Die Lordosenstütze umfasst einen Winkelversteller und einen Aktuator, die derart miteinander verbunden sind, dass eine von dem Aktuator erzeugte Bewegung eine Verstellung des Winkelverstellers hervorruft.

Der Erfindung liegt die Aufgabe zugrunde, eine Lordosenstütze zu schaffen, die bei kleinen Aktuatorwegen stufenlos einstellbar ist.

Die Aufgabe wird durch eine Lordosenstütze nach Anspruch 1 und durch einen Sitz nach Anspruch 12 gelöst. Vorteilhafte Ausgestaltungen der Lordosenstütze sind Gegenstand der Ansprüche 2 bis 11.

Die erfindungsgemäße Lordosenstütze für einen Sitz, der eine Rückenebene definiert, umfasst eine Stützvorrichtung, die ein oberes Ende, das einen oberen Neigungswinkel mit der Rückenebene einschließt, und ein unteres Ende, das einen unteren Neigungswinkel mit der Rückenebene einschließt, aufweist und einen Wölbscheitel bildet, der sich in einer verstellbaren Position zwischen dem oberen Ende und dem unteren Ende befindet, wenigstens einen Winkelversteller, der mit dem oberen Ende oder dem unteren Ende verbunden und geeignet ist, den oberen Neigungswinkel oder den unteren Neigungswinkel zu verändern, um die Position des Wölbscheitels einzustellen und einen Aktuator zum Verstellen des Winkelverstellers. Der Winkelversteller ist derart mit dem Aktuator verbunden, dass eine von dem Aktuator erzeugte Bewegung, insbesondere eine translatorische Bewegung, eine translatorische und rotatorische Verstellung des Winkelverstellers hervorruft, um den oberen Neigungswinkel oder den unteren Neigungswinkel zu verändern.

Der Wölbscheitel ist der Scheitelpunkt der Stützvorrichtung, also der Punkt der Stützvorrichtung, der im verbauten Zustand die größte Entfernung zu der Rückenebene in einer Längsrichtung des Sitzes hat. Die Position des Wölbscheitels weist eine Längskomponente in Bezug auf die Rückenebene in einer zu der Rückenebene senkrechten Richtung und eine Höhenkomponente in Bezug auf eine Bezugsebene, die durch eine Sitzfläche des Sitzes und senkrecht zu der Rückenebene verläuft, auf.

Beim Verändern des oberen und/oder des unteren Neigungswinkels wird die Stützvorrichtung in ihrer Form verändert, sodass die Position des Wölbscheitels in der Höhenkomponente und/oder in der Längskomponente verstellt wird. Durch das Verstellen der Position des Wölbscheitels durch den oder die Winkelversteller sind nur kleine Aktuatorwege erforderlich. Die Lordosenstütze ist stufenlos verstellbar.

Erfindungsgemäß umfasst die Lordosenstütze ein Lagerelement für den Winkelversteller und eine Koppel, die ein erstes Ende und ein zweites Ende aufweist, wobei der Winkelversteller ein Einspannelement aufweist, das einen Verbindungsabschnitt und eine Koppelstelle umfasst, wobei der Verbindungsabschnitt an dem Lagerelement drehbar und verschieblich gelagert ist, wobei das erste Ende der Koppel an der Koppelstelle drehbar mit dem Einspannelement und das zweite Ende der Koppel drehbar mit dem Lagerelement verbunden ist und wobei der Aktuator an dem Verbindungsabschnitt angreift, um eine Bewegung des Einspannelements relativ zu dem Lagerelement hervorzurufen, durch die der obere Neigungswinkel oder der untere Neigungswinkel verändert wird.

Durch ein Betätigen des Aktuators wird der Verbindungsabschnitt des Einspannelements an dem Lagerelement verschoben. Die Koppel bewirkt dabei, dass zusätzlich eine Neigung des Einspannelements hervorgerufen wird. Über die Neigung des Einspannelements wird der obere Neigungswinkel oder der untere Neigungswinkel verändert.

Vorteilhaft weist die Lordosenstütze einen oberen Winkelversteller, der mit dem oberen Ende verbunden ist, und einen unteren Winkelversteller auf, der mit dem unteren Ende verbunden ist. So entsteht eine Vierwege-Lordosenstütze, bei der Wölbung und Höhe des Wölbscheitels einstellbar sind.

Bei einer vorteilhaften Ausgestaltung ist die Stützvorrichtung an dem oberen Ende und/oder an dem unteren Ende drehfest in den Winkelversteller eingespannt. Auf diese Weise ist sichergestellt, dass eine Veränderung des oberen und/oder des unteren Neigungswinkels eine Veränderung der Wölbung der Stützvorrichtung bewirkt, sodass die Position des Wölbscheitels verstellt wird.

Vorteilhaft weist die Stützvorrichtung eine Lordosenmatte auf, die mit einer Vielzahl von gelenkig miteinander verbundenen Mattenelementen versehen ist. Die Stützvorrichtung kann so eine an die Wirbelsäule besonders gut angepasste Form annehmen, sodass die Lordose optimal abgestützt wird.

Um die Form der Stützvorrichtung an die Wirbelsäule anpassen zu können, weisen die Mattenelemente vorteilhaft eine Erstreckungsachse auf, die im Wesentlichen parallel zu der Rückenebene verläuft.

Der Aktuator ermöglicht ein komfortables Verstellen der Position des Wölbscheitels und kann vorteilhaft als Formgedächtnisaktuator ausgebildet sein. Formgedächtnisaktuatoren haben unter anderem den Vorteil, dass sie vergleichsweise leicht, leise und energiesparsam sind. Formgedächtnisaktuatoren eignen sich für die Verwendung bei der Lordosenstütze besonders, da sie bei den lediglich kleinen Verstellwegen große Kräfte aufbringen.

Bei einer vorteilhaften Ausgestaltung kann der Aktuator mit einem verschiebbar gelagerten Loslager versehen sein, das mit dem Verbindungsabschnitt verbunden ist. Vorzugsweise weist das Einspannelement einen Bolzen auf, der zum Übertragen einer Verschiebung des Loslagers auf das Einspannelement an dem Loslager befestigt ist.

Vorteilhaft umfasst die Lordosenstütze eine Arretiereinrichtung zum Arretieren des Winkelverstellers. Der Winkelversteller kann dann, wenn der Wölbscheitel in der gewünschten Position ist, arretiert werden. Auf diese Weise verbleibt der Winkelversteller stets in seiner Einstellung, selbst dann, wenn der Aktuator nicht bestromt ist.

Bei einer vorteilhaften Ausgestaltung kann die Arretiereinrichtung eine Schlingfeder und einen Schlingfederantrieb aufweisen, wobei der Schlingfederantrieb ausgebildet ist, die Schlingfeder von einem entspannten Zustand, in dem die Schlingfeder den Winkelversteller arretiert, in einen gespannten Zustand, in dem die Schlingfeder den Winkelversteller freigibt, zu überführen.

Bei einer vorteilhaften Ausgestaltung umfasst die Lordosenstütze eine Befestigungsplatte, an welcher der Winkelversteller durch das Lagerelement gelagert ist. Dadurch ergibt sich eine funktions- und praxisgerechte Verbindung des Winkelverstellers mit dem Sitz.

Der erfindungsgemäße Sitz ist insbesondere ein Kraftfahrzeugsitz, der die Lordosenstütze aufweist.

Im Folgenden wird die Erfindung mit Bezug auf schematische Zeichnungen anhand von Ausführungsbeispielen beschrieben. In den Zeichnungen zeigt:
- Fig. 1: eine perspektivische Ansicht eines Fahrzeugsitzes;
- Fig. 2: eine perspektivische Ansicht eines ersten Ausführungsbeispiels der erfindungsgemäßen Lordosenstütze;
- Fig. 3a: eine Seitenansicht eines zweiten Ausführungsbeispiels der erfindungsgemäßen Lordosenstütze, bei welcher der obere Neigungswinkel und der untere Neigungswinkel minimiert sind;
- Fig. 3b: eine Seitenansicht des Ausführungsbeispiels gemäß Fig. 3a, bei welcher der untere Neigungswinkel maximiert ist;
- Fig. 3c: eine Seitenansicht des Ausführungsbeispiels gemäß Fig. 3a, bei welcher der untere Neigungswinkel und der obere Neigungswinkel erhöht sind;
- Fig. 3d: eine Seitenansicht des Ausführungsbeispiels gemäß Fig. 3a, bei welcher der obere Neigungswinkel maximiert ist;
- Fig. 4a: eine vergrößerte Ansicht des unteren Winkelverstellers gemäß dem Detail IVa in Fig. 3a;
- Fig. 4b: eine vergrößerte Ansicht des unteren Winkelverstellers gemäß dem Detail IVb in Fig. 3b;
- Fig. 4c: eine vergrößerte Ansicht des unteren Winkelverstellers gemäß dem Detail IVc in Fig. 3c;
- Fig. 4d: eine vergrößerte Ansicht des unteren Winkelverstellers gemäß dem Detail IVd in Fig. 3d und
- Fig. 5: einen Schnitt durch eine Arretiereinrichtung.

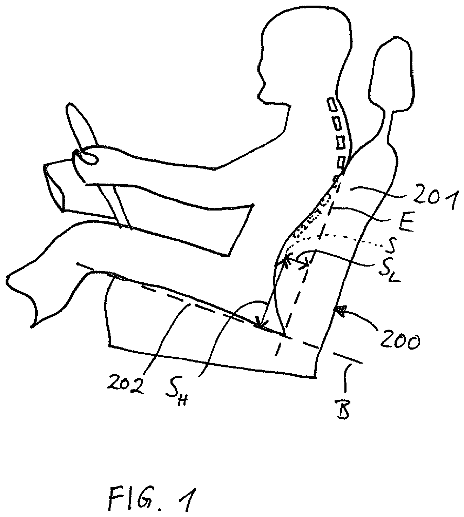

Fig. 1 zeigt einen Sitz 200, wie er in einem Kraftfahrzeug verbaut wird. Der Sitz 200 weist eine Rückenlehne 201 und eine Sitzfläche 202 auf und definiert eine Rückenebene E. Eine in Fig. 1 nicht gezeigte Lordosenstütze ist in der Rückenlehne 201 verbaut und unterstützt die Lordose im Bereich der Lendenwirbelsäule.

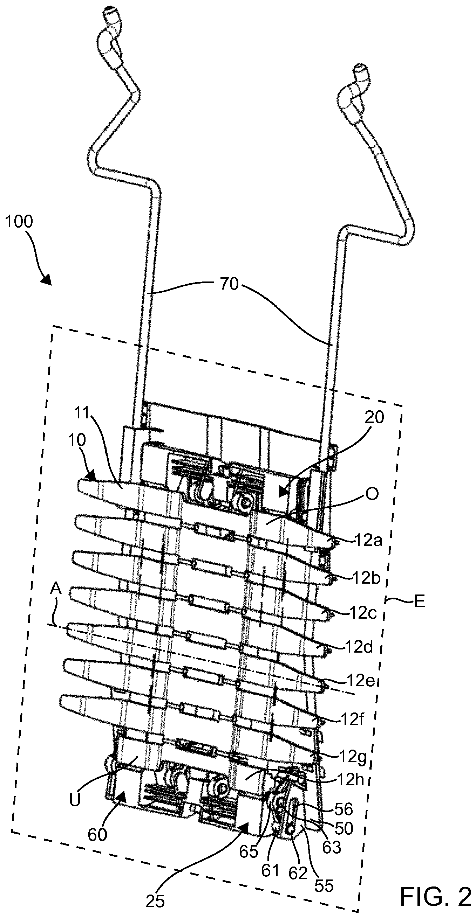

Eine Lordosenstütze 100 für den Sitz 200 zeigt anschaulich Fig. 2. Die Lordosenstütze 100 umfasst eine Stützvorrichtung 10, einen oberen Winkelversteller 20 und einen unteren Winkelversteller 25. Die Stützvorrichtung 10 weist ein oberes Ende O und ein unteres Ende U auf. Der obere Winkelversteller 20 ist mit dem oberen Ende O verbunden. Der untere Winkelversteller 25 ist mit dem unteren Ende U verbunden. Zweckmäßigerweise ist die Stützvorrichtung 10 an dem oberen Ende O drehfest in den oberen Winkelversteller 20 und an dem unteren Ende U drehfest in den unteren Winkelversteller 25 eingespannt.

Die Stützvorrichtung 10 weist ferner eine Lordosenmatte 11 auf. Die Lordosenmatte 11 ist mit einer Vielzahl von Mattenelementen 12a, 12b, 12c, 12d, 12e, 12f, 12g, 12h versehen, die gelenkig miteinander verbundenen sind und jeweils eine Erstreckungsachse A aufweisen, welche nur beispielhaft für das Mattenelement 12e eingezeichnet ist. Die Erstreckungsachse A verläuft im Wesentlichen parallel zu der Rückenebene E.

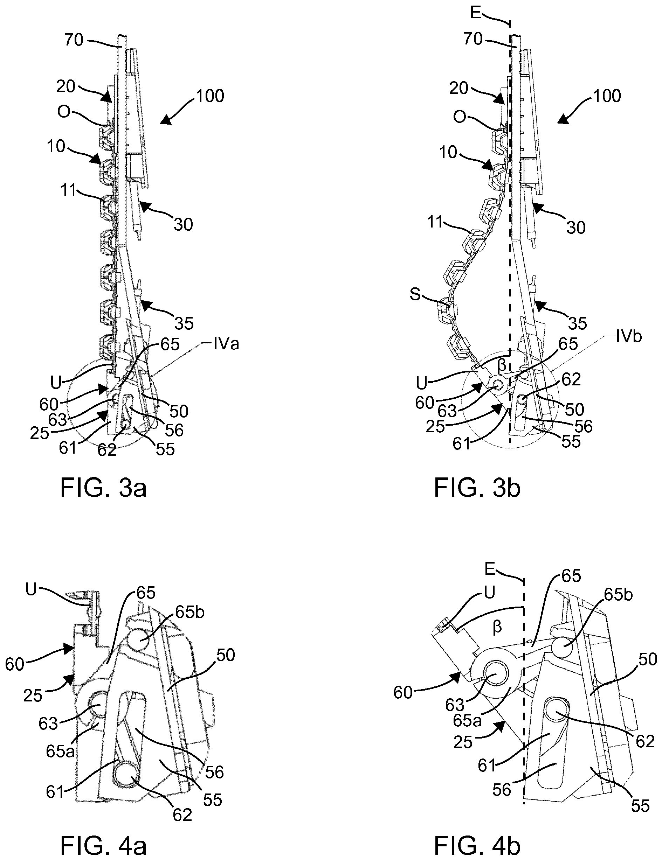

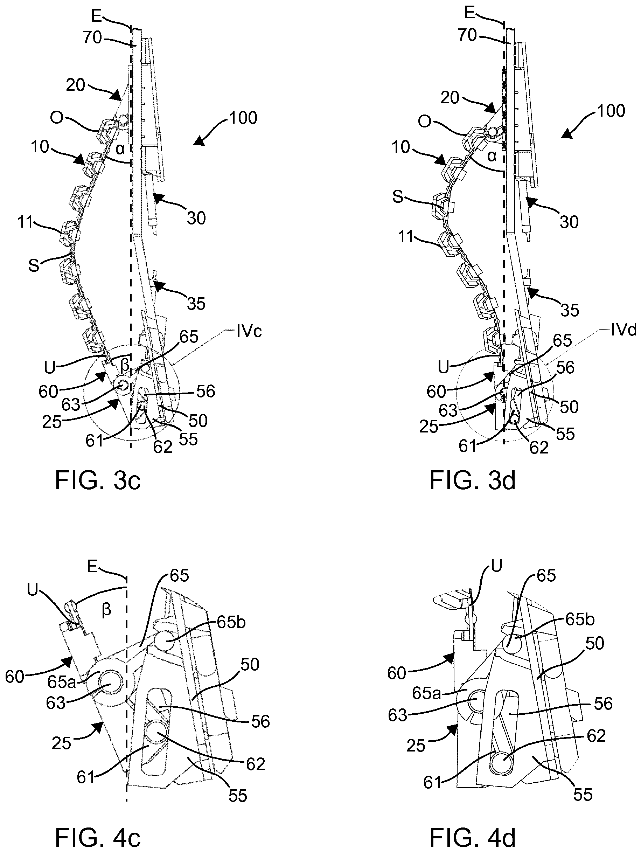

Wie Fig. 3a bis 3d anschaulich zeigen, schließt das obere Ende O der Stützvorrichtung 10 einen oberen Neigungswinkel α mit der Rückenebene E ein. Das untere Ende U der Stützvorrichtung 10 schließt einen unteren Neigungswinkel β mit der Rückenebene E ein. Die Stützvorrichtung 10 bildet einen Wölbscheitel S, der sich in einer verstellbaren Position zwischen dem oberen Ende O und dem unteren Ende U befindet. Die Winkelversteller 20, 25 dienen dazu, den oberen Neigungswinkel α beziehungsweise den unteren Neigungswinkel β zu verändern, um die Position des Wölbscheitels S zu verstellen.

Der Wölbscheitel S ist der Scheitelpunkt der Stützvorrichtung 10. Der Wölbscheitel S ist damit der Punkt der Stützvorrichtung 10, welcher den größten Abstand zu der Rückenebene E hat. Wie in Fig. 1 anschaulich gezeigt ist, weist die Position des Wölbscheitels S eine Längskomponente S_{L} in Bezug auf die Rückenebene E in einer zu der Rückenebene E senkrechten Richtung und eine Höhenkomponente S_{H} in Bezug auf eine Bezugsebene B, die durch die Sitzfläche 202 und senkrecht zu der Rückenebene E verläuft, auf. Beim Verändern des oberen Neigungswinkels α und/oder des unteren Neigungswinkels β wird die Stützvorrichtung 10 in ihrer Form verändert, sodass die Position des Wölbscheitels S in der Höhenkomponente S_{H} und/oder in der Längskomponente S_{L} verstellt wird. Somit kann die Stützvorrichtung 10 so in ihrer Form angepasst werden, dass sie die Lordose gut abstützen kann.

Bei der hier gezeigten Lordosenstütze 100 handelt es sich um eine Vierwege-Lordosenstütze 100, bei der die Wölbung der Stützvorrichtung 10 und die Höhe des Wölbscheitels S einstellbar sind. Die Wölbung der Stützvorrichtung 10 ergibt sich mittelbar aus der Längskomponente S_{L} der Position des Wölbscheitels S, denn die Wölbung der Stützvorrichtung 10 wird stärker, je größer die Entfernung des Wölbscheitels S zu der Rückenebene E in der Längsrichtung ist. Die Höhe des Wölbscheitels S ergibt sich aus der Höhenkomponente S_{H} der Position des Wölbscheitels S. Bei anderen Ausführungsformen ist es möglich, entweder nur das obere Ende O oder nur das untere Ende U mit einem Winkelversteller 20, 25 zu verbinden. In diesem Fall spricht man von einer Zweiwege-Lordosenstütze.

Die Lordosenstütze 100 weist Aktuatoren 30, 35 auf, die jeweils als Formgedächtnisaktuatoren ausgebildet sind. Durch den Aktuator 30 ist der Winkelversteller 20 verstellbar, um den oberen Neigungswinkel α zu verändern. Gleichermaßen ist durch den Aktuator 35 der Winkelversteller 25 verstellbar, um den unteren Neigungswinkel β zu verändern. Die Aktuatoren 30, 35 machen das Verstellen der Neigungswinkel α, β somit erheblich einfacher. Formgedächtnisaktuatoren im Speziellen sind extrem leise sind und können mit wenig Energieverbrauch betrieben werden. Ferner eignen sich diese für die Verwendung bei der Lordosenstütze 100 besonders gut, da durch die Winkelversteller 20, 25 lediglich geringe Verstellwege erforderlich sind, bei denen Formgedächtnisaktuatoren große Kräfte aufbringen.

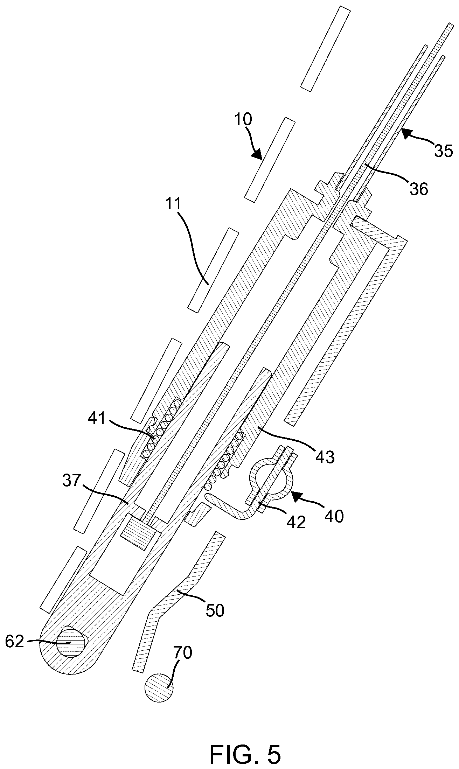

Wie Fig. 5 anschaulich zeigt, weist die Lordosenstütze 100 eine Arretiereinrichtung 40 zum Arretieren des unteren Winkelverstellers 25 auf. Ferner kann die Lordosenstütze 100 eine weitere Arretiereinrichtung aufweisen, um den oberen Winkelversteller 20 zu arretieren. Mittels der Arretiereinrichtung 40 kann der Aktuator 35 stromlos geschaltet werden, wenn die gewünschte Position des Wölbscheitels S erreicht ist. Der Wölbscheitel S bleibt dann in seiner Position, da der Winkelversteller 20 arretiert ist. Somit ist ein nahezu verbrauchsfreier Dauerbetrieb der Lordosenstütze 100 möglich.

Wie Fig. 5 ferner zeigt, weist der Aktuator 35 einen Antriebszug 36 auf, der mit einem Loslager 37 kraftschlüssig verbunden ist. Das Loslager 37 ist verschiebbar an dem Aktuator 35 befestigt, und zwar in Richtung des Antriebszugs 36. Durch eine auf den Antriebszug 36 wirkende Zugkraft wird das Loslager 37 zu dem Antriebszug 36 hin bewegt.

Die Arretiereinrichtung 40 weist eine Schlingfeder 41, die in einer Schlingfederaufnahme 43 aufgenommen ist, und einen Schlingfederantrieb 42 auf. Die Schlingfeder 41 umgibt das Loslager 37. Der Schlingfederantrieb 42 überführt die Schlingfeder 41 von einem entspannten Zustand in einen gespannten Zustand. In dem entspannten Zustand liegt die Schlingfeder 41 unmittelbar an dem Loslager 37 an. Dadurch wirkt eine Reibungskraft zwischen der Schlingfeder 41 und dem Loslager 37, sodass die Schlingfeder 41 das Loslager 37 und so den Winkelversteller 25 arretiert. In dem gespannten Zustand gibt die Schlingfeder 41 das Loslager 37 und den Winkelversteller 25 frei.

Die Lordosenstütze 100 umfasst ferner eine Befestigungsplatte 50, ein Lagerelement 55, ein Einspannelement 60 und eine Koppel 65. Der Winkelversteller 25 ist durch das Lagerelement 55 an der Befestigungsplatte 50 gelagert. Die Stützvorrichtung 10 ist in das Einspannelement 60 eingespannt. Zu der Befestigungsplatte 50 sind Haltedrähte 70 geführt. Das Einspannelement 60 weist einen Verbindungsabschnitt 61, der drehbar und verschieblich an dem Lagerelement 55 gelagert ist, und eine Koppelstelle 63 auf. Dazu ist an dem Lagerelement 55 eine langlochförmige Ausnehmung 56 vorgesehen. Der Verbindungsabschnitt 61 umfasst einen zylinderförmigen Bolzen 62, der in die Ausnehmung 56 eingreift und mit Loslager 37 des Aktuators 35 verbunden ist. Der Bolzen 62 kann entlang der Ausnehmung 56 verschoben und in dieser gedreht werden. Die Koppel 65 weist ein erstes Ende 65a und ein zweites Ende 65b auf und ist starr ausgebildet. Das erste Ende 65a ist an der Koppelstelle 63 drehbar mit dem Einspannelement 60 verbunden. Das zweite Ende 65b ist drehbar mit dem Lagerelement 55 verbunden.

Um die Position des Wölbscheitels S zu verstellen, bewirkt der Aktuator 35 eine Bewegung des Bolzens 62 in der Ausnehmung 56. Das Einspannelement 60 wird dann translatorisch entlang der Ausnehmung bewegt. Aufgrund der Verbindung mit der starren Koppel 65 entsteht zusätzlich eine Rotationsbewegung des Einspannelements 60 um den Bolzen 62. Das Einspannelement 60, in dem das untere Ende U der Stützvorrichtung 10 drehfest eingespannt ist, wird durch die Rotationsbewegung relativ zu der Rückenebene E geneigt, sodass der untere Neigungswinkel β verändert wird.

Die Fig. 3a bis 3d und 4a bis 4d zeigen anschaulich die Lordosenstütze 100 bei unterschiedlichen Neigungswinkeln α, β sowie die jeweils korrespondieren Stellungen der Winkelversteller 20, 25. Ferner ist ersichtlich, wie die Kombination der Stellungen der Winkelversteller 20, 25 unterschiedliche Formen der Stützvorrichtung 10 und dadurch bedingt unterschiedliche Positionen des Wölbscheitels S bewirkt.

Die Lordosenstütze 100 gemäß den hier beschriebenen Ausführungsbeispielen ist somit stufenlos einstellbar. Durch die unterschiedlichen Positionen des Wölbscheitels S werden unterschiedliche Wölbungen der Stützvorrichtung 10 und Höhen des Wölbscheitels S erzielt. Die hier notwendigen Aktuatorwege sind im Vergleich zu konventionellen Lordosenstützen signifikant verkürzt. Bei Verwendung von Formgedächtnisaktuatoren kann zudem eine äußerst geräuscharme und energiesparsame Umsetzung erzielt werden.

**Bezugszeichenliste**

| | | | |
|---|---|---|---|
| 10 | Stützvorrichtung | 60 | Einspannelement |
| 11 | Lordosenmatte | 61 | Verbindungsabschnitt |
| 12a | Mattenelement | 62 | Bolzen |
| 12b | Mattenelement | 63 | Koppelstelle |
| 12c | Mattenelement | 65 | Koppel |
| 12d | Mattenelement | 65a | erstes Ende |
| 12e | Mattenelement | 65b | zweites Ende |
| 12f | Mattenelement | | |
| 12g | Mattenelement | 70 | Haltedraht |
| 12h | Mattenelement | 100 | Lordosenstütze |
| 20 | Winkelversteller | 200 | Sitz |
| 25 | Winkelversteller | 201 | Rückenlehne |
| 30 | Aktuator | 202 | Sitzfläche |
| 35 | Aktuator | A | Erstreckungsachse |
| 36 | Antriebszug | B | Bezugsebene |
| 37 | Loslager | E | Rückenebene |
| 40 | Arretiereinrichtung | O | oberes Ende |
| 41 | Schlingfeder | S | Wölbscheitel |
| 42 | Schlingfederantrieb | S_{H} | Höhenkomponente |
| 43 | Schlingfederaufnahme | S_{L} | Längskomponente |
| | | U | unteres Ende |
| 50 | Befestigungsplatte | | |
| 55 | Lagerelement | α | oberer Neigungswinkel |
| 56 | Ausnehmung | β | unterer Neigungswinkel |

## Patentansprüche

1. Lordosenstütze (100) für einen Sitz (200), der eine Rückenebene (E) definiert, umfassend:
eine Stützvorrichtung (10), die ein oberes Ende (O), das einen oberen Neigungswinkel (a) mit der Rückenebene (E) einschließt, und ein unteres Ende (U), das einen unteren Neigungswinkel (β) mit der Rückenebene (E) einschließt, aufweist und einen Wölbscheitel (S) bildet, der sich in einer verstellbaren Position zwischen dem oberen Ende (O) und dem unteren Ende (U) befindet;
wenigstens einen Winkelversteller (20, 25), der mit dem oberen Ende (O) oder dem unteren Ende (U) der Stützvorrichtung (10) verbunden und geeignet ist, den oberen Neigungswinkel (α) oder den unteren Neigungswinkel (β) zu verändern, um die Position des Wölbscheitels (S) einzustellen, und
einen Aktuator (30, 35) zum Verstellen des Winkelverstellers (20, 25);
wobei der Winkelversteller (20, 25) derart mit dem Aktuator (30, 35) verbunden ist, dass eine von dem Aktuator (30, 35) erzeugte Bewegung eine translatorische und rotatorische Verstellung des Winkelverstellers (20, 25) hervorruft, um den oberen Neigungswinkel (α) oder den unteren Neigungswinkel (β) zu verändern;
**gekennzeichnet durch** ein Lagerelement (55) für den Winkelversteller (20, 25) und durch eine Koppel (65), die ein erstes Ende (65a) und ein zweites Ende (65b) aufweist;
wobei der Winkelversteller (20, 25) ein Einspannelement (60) aufweist, das einen Verbindungsabschnitt (61) und eine Koppelstelle (63) umfasst;
wobei der Verbindungsabschnitt (61) an dem Lagerelement (55) drehbar und verschieblich gelagert ist;
wobei das erste Ende (65a) der Koppel (65) an der Koppelstelle (63) drehbar mit dem Einspannelement (60) und das zweite Ende (65b) der Koppel (65) drehbar mit dem Lagerelement (55) verbunden ist und
wobei der Aktuator (30, 35) an dem Verbindungsabschnitt (61) angreift, um eine Bewegung des Einspannelements (60) relativ zu dem Lagerelement (55) hervorzurufen, durch die der obere Neigungswinkel (α) oder der untere Neigungswinkel (β) verändert wird.

2. Lordosenstütze (100) nach Anspruch 1, **gekennzeichnet durch** einen oberen Winkelversteller (20), der mit dem oberen Ende (O) verbunden ist, und einen unteren Winkelversteller (25), der mit dem unteren Ende (U) verbunden ist.

3. Lordosenstütze (100) nach einem der Ansprüche 1 bis 2, **dadurch gekennzeichnet, dass** die Stützvorrichtung (10) an dem oberen Ende (O) und/oder an dem unteren Ende (U) drehfest in den Winkelversteller (20, 25) eingespannt ist.

4. Lordosenstütze (100) nach einem der Ansprüche 1 bis 3, **dadurch gekennzeichnet, dass** die Stützvorrichtung (10) eine Lordosenmatte (11) aufweist, die mit einer Vielzahl von gelenkig miteinander verbundenen Mattenelementen (12a, 12b, 12c, 12d, 12e, 12f, 12g, 12h) versehen ist.

5. Lordosenstütze (100) nach Anspruch 4, **dadurch gekennzeichnet, dass** die Mattenelemente (12a, 12b, 12c, 12d, 12e, 12f, 12g, 12h) eine Erstreckungsachse (A) aufweisen, die im Wesentlichen parallel zu der Rückenebene (E) verläuft.

6. Lordosenstütze (100) nach einem der Ansprüche 1 bis 5, **dadurch gekennzeichnet, dass** der Aktuator (30, 35) als Formgedächtnisaktuator ausgebildet ist.

7. Lordosenstütze (100) nach einem der Ansprüche 1 bis 6, **dadurch gekennzeichnet, dass** der Aktuator (30, 35) mit einem verschiebbar gelagerten Loslager (37) versehen ist, das mit dem Verbindungsabschnitt (61) verbunden ist.

8. Lordosenstütze (100) nach Anspruch 7, **dadurch gekennzeichnet, dass** das Einspannelement (60) einen Bolzen (62) aufweist, der zum Übertragen einer Verschiebung des Loslagers (37) auf das Einspannelement (60) an dem Loslager (37) befestigt ist.

9. Lordosenstütze (100) nach einem der Ansprüche 1 bis 8, **gekennzeichnet durch** eine Arretiereinrichtung (40) zum Arretieren des Winkelverstellers (20, 25).

10. Lordosenstütze (100) nach Anspruch 9, **dadurch gekennzeichnet, dass** die Arretiereinrichtung (40) eine Schlingfeder (41) und einen Schlingfederantrieb (42) aufweist, wobei der Schlingfederantrieb (42) ausgebildet ist, die Schlingfeder (41) von einem entspannten Zustand, in dem die Schlingfeder (41) den Winkelversteller (20, 25) arretiert, in einen gespannten Zustand zu überführen, in welchem die Schlingfeder (41) den Winkelversteller (20, 25) freigibt.

11. Lordosenstütze (100) nach einem der Ansprüche 1 bis 10, **gekennzeichnet durch** eine Befestigungsplatte (50), an welcher der Winkelversteller (20, 25) durch das Lagerelement (55) gelagert ist.

12. Sitz (200), insbesondere für ein Kraftfahrzeug, **gekennzeichnet durch** die Lordosenstütze (100) nach einem der Ansprüche 1 bis 11.

## Claims

1. Lumbar support (100) for a seat (200) defining a back plane (E) comprising:
a support device (10) having an upper end (O) including an upper angle of inclination (α) with the back plane (E) and a lower end (U) including a lower angle of inclination (β) with the back plane (E) and forming a crown of a curvature (S) located in an adjustable position between the upper end (O) and the lower end (U);
at least one angle adjuster (20, 25) connected to the upper end (O) or the lower end (U) of the support device (10) and adapted to vary the upper angle of inclination (α) or the lower angle of inclination (β) to adjust the position of the crown of the curvature (S), and
an actuator (30, 35) for adjusting the angle adjuster (20, 25);
the angle adjuster (20, 25) being connected to the actuator (30, 35) such that a movement generated by the actuator (30, 35) causes a translational and rotational adjustment of the angle adjuster (20, 25) to change the upper angle of inclination (α) or the lower angle of inclination (β);
**characterised by** a bearing element (55) for the angle adjuster (20, 25) and by a coupling (65) which has a first end (65a) and a second end (65b);
the angle adjuster (20, 25) having a clamping member (60) which comprises a connecting portion (61) and a coupling point (63);
the connecting portion (61) being rotatably and slidably mounted on the bearing element (55),
wherein the first end (65a) of the coupler (65) is rotatably connected to the clamping member (60) at the coupling point (63) and the second end (65b) of the coupler (65) is rotatably connected to the bearing member (55), and
wherein the actuator (30, 35) engages the connecting portion (61) to cause movement of the clamping member (60) relative to the bearing member (55) by means of which the upper inclination angle (α) or the lower inclination angle (β) is changed.

2. Lumbar support (100) according to claim 1, **characterised by** an upper angle adjuster (20) connected to the upper end (O) and a lower angle adjuster (25) connected to the lower end (U).

3. Lumbar support (100) according to any one of claims 1 to 2, **characterised in that** the support device (10) is clamped in the angle adjuster (20, 25) at the upper end (O) and/or at the lower end (U) in a non-rotatable manner.

4. Lumbar support (100) according to any one of claims 1 to 3, **characterised in that** the support device (10) comprises a lordosis mat (11) which is provided with a plurality of mat elements (12a, 12b, 12c, 12d, 12e, 12f, 12g, 12h) which are connected to one another in an articulated manner.

5. Lumbar support (100) according to claim 4, **characterised in that** the mat elements (12a, 12b, 12c, 12d, 12e, 12f, 12g, 12h) have an extension axis (A) which extends substantially parallel to the back plane (E).

6. Lumbar support (100) according to any one of claims 1 to 5, **characterised in that** the actuator (30, 35) is designed as a shape memory actuator.

7. Lumbar support (100) according to any one of claims 1 to 6, **characterised in that** the actuator (30, 35) is provided with a slidably mounted movable bearing (37) which is connected to the connecting portion (61).

8. Lumbar support (100) according to claim 7, **characterised in that** the clamping member (60) comprises a bolt (62) fixed to the movable bearing (37) for transmitting a displacement of the movable bearing (37) to the clamping member (60).

9. Lumbar support (100) according to any one of claims 1 to 8, **characterised by** a locking device (40) for locking the angle adjuster (20, 25).

10. Lumbar support (100) according to claim 9, **characterised in that** the locking device (40) has a wrap spring (41) and a wrap spring drive (42), the wrap spring drive (42) being designed to transfer the wrap spring (41) from a relaxed state, in which the wrap spring (41) locks the angle adjuster (20, 25), to a tensioned state, in which the wrap spring (41) releases the angle adjuster (20, 25).

11. Lumbar support (100) according to any one of claims 1 to 10, **characterised by** a fastening plate (50) on which the angle adjuster (20, 25) is mounted by the bearing element (55).

12. Seat (200), in particular for a motor vehicle, **characterised by** the lumbar support (100) according to one of claims 1 to 11.

## Revendications

1. Support lombaire (100) pour un siège (200) définissant un plan dorsal (E), comprenant
un dispositif de support (10) qui comprend une extrémité supérieure (O) définissant un angle d'inclinaison supérieur (α) avec le plan dorsal (E), et une extrémité inférieure (U) définissant un angle d'inclinaison inférieur (β) avec le plan dorsal (E), et qui forme un sommet de courbure (S) situé dans une position réglable entre l'extrémité supérieure (O) et l'extrémité inférieure (U);
au moins un dispositif de réglage d'angle (20, 25) relié à l'extrémité supérieure (O) ou à l'extrémité inférieure (U) du dispositif de support (10) et capable de modifier l'angle d'inclinaison supérieur (α) ou l'angle d'inclinaison inférieur (β) afin de régler la position du sommet de courbure (S), et
un actionneur (30, 35) pour le réglage du dispositif de réglage d'angle (20, 25);
dans lequel
le dispositif de réglage d'angle (20, 25) est relié à l'actionneur (30, 35) de telle sorte qu'un mouvement généré par l'actionneur (30, 35) provoque un ajustement en translation et en rotation du dispositif de réglage d'angle (20, 25) afin de modifier l'angle d'inclinaison supérieur (α) ou l'angle d'inclinaison inférieur (β);
**caractérisé par** un élément de palier (55) pour le dispositif de réglage d'angle (20, 25) et par un coupleur (65) ayant une première extrémité (65a) et une seconde extrémité (65b);
dans lequel
le dispositif de réglage d'angle (20, 25) comprend un élément de serrage (60) qui présente une portion de liaison (61) et un emplacement de couplage (63);
la portion de liaison (61) est montée de façon mobile en rotation et en translation sur l'élément de palier (55) ;
à l'emplacement de couplage (63), la première extrémité (65a) du coupleur (65) est reliée de façon mobile en rotation à l'élément de serrage (60), et la seconde extrémité (65b) du coupleur (65) est reliée de façon mobile en rotation à l'élément de palier (55), et
l'actionneur (30, 35) attaque la portion de liaison (61) pour provoquer un mouvement de l'élément de serrage (60) par rapport à l'élément de palier (55), mouvement par lequel l'angle d'inclinaison supérieur (α) ou l'angle d'inclinaison inférieur (β) est modifié.

2. Support lombaire (100) selon la revendication 1,
**caractérisé par**
un dispositif de réglage d'angle (20) supérieur qui est relié à l'extrémité supérieure (O) et par un dispositif de réglage d'angle (25) inférieur qui est relié à l'extrémité inférieure (U).

3. Support lombaire (100) selon l'une des revendications 1 à 2,
**caractérisé en ce que**
le dispositif de support (10) est serré solidairement en rotation dans le dispositif de réglage d'angle (20, 25) à l'extrémité supérieure (O) et/ou à l'extrémité inférieure (U).

4. Support lombaire (100) selon l'une des revendications 1 à 3,
**caractérisé en ce que**
le dispositif de support (10) comprend une natte lombaire (11) qui est pourvue d'une multitude d'éléments de natte (12a, 12b, 12c, 12d, 12e, 12f, 12g, 12h) reliés de façon articulée les uns aux autres.

5. Support lombaire (100) selon la revendication 4,
**caractérisé en ce que**
les éléments de natte (12a, 12b, 12c, 12d, 12e, 12f, 12g, 12h) présentent un axe d'extension (A) qui s'étend sensiblement parallèlement au plan dorsal (E).

6. Support lombaire (100) selon l'une des revendications 1 à 5,
**caractérisé en ce que**
l'actionneur (30, 35) est réalisé sous forme d'actionneur à mémoire de forme.

7. Support lombaire (100) selon l'une des revendications 1 à 6,
**caractérisé en ce que**
l'actionneur (30, 35) est pourvu d'un palier fou (37) monté de façon mobile en translation et relié à la portion de liaison (61).

8. Support lombaire (100) selon la revendication 7,
**caractérisé en ce que**
l'élément de serrage (60) comprend un goujon (62) qui est fixé au palier fou (37) pour transmettre une translation du palier fou (37) à l'élément de serrage (60).

9. Support lombaire (100) selon l'une des revendications 1 à 8,
**caractérisé par**
un moyen d'arrêt (40) pour arrêter le dispositif de réglage d'angle (20, 25).

10. Support lombaire (100) selon la revendication 9,
**caractérisé en ce que**
le moyen d'arrêt (40) comprend un ressort en boudin (41) et un entraînement à ressort en boudin (42), l'entraînement à ressort en boudin (42) étant réalisé pour transférer le ressort en boudin (41) depuis un état détendu dans lequel le ressort en boudin (41) arrête le dispositif de réglage d'angle (20, 25), vers un état bandé dans lequel le ressort en boudin (41) libère le dispositif de réglage d'angle (20, 25).

11. Support lombaire (100) selon l'une des revendications 1 à 10,
**caractérisé par**
une plaque de fixation (50) sur laquelle est monté le dispositif de réglage d'angle (20, 25) par l'élément de palier (55).

12. Siège (200), en particulier pour un véhicule automobile, **caractérisé par** le support lombaire (100) selon l'une des revendications 1 à 11.
